# EUROPÄISCHE PATENTSCHRIFT

(11) **EP 0 461 357 B1**
(45) Veröffentlichungstag und Bekanntmachung des Hinweises auf die Patenterteilung: **08.06.1994**
(21) Anmeldenummer: 91105324.7
(22) Anmeldetag: 04.04.1991
(51) Int. Cl.: B23B 29/32

(54) **Werkzeugrevolver**
Tool holding turret
Tourelle révolver porte outil

(30) Priorität: 09.06.1990 DE 4018543
(43) Veröffentlichungstag der Anmeldung: 18.12.1991
(73) Patentinhaber: Sauter Feinmechanik GmbH, D-72555 Metzingen (DE)
(72) Erfinder: Thumm, Helmut, Dipl.-Ing. (FH), W-7430 Metzingen (DE)
(74) Vertreter: Patentanwälte Bartels und Partner

(56) Entgegenhaltungen:
- DE-A- 3 625 218
- DE-A- 3 637 823
- DE-C- 3 730 561
- DE-U- 7 333 601

## Beschreibung

Die Erfindung betrifft einen Werkzeugrevolver, der die Merkmale des Oberbegriffs des Anspruches 1 aufweist.

Bei einem bekannten Werkzeugrevolver dieser Art (DE-A-3 625 218) ist an die eine Stirnseite des Revolverkopfes eine Nabe angeformt, die als eine hohle Säule bezeichnet werden kann und der drehbaren sowie axial verschiebbaren Lagerung des Revolverkopfes im Revolvergehäuse dient. Um eine an der Werkzeugscheibe befestigte Lünette betätigen zu können, ist eine Druckmittelleitung durch das eine Teil des Revolvergehäuses, eine zwischen diesem und der Nabe angeordnete Flanschbuchse, einen Abschnitt der Nabe und die Werkzeugscheibe hindurch zu der Lünette geführt. Weiterhin ist durch die Nabe hindurch eine Antriebswelle geführt, auf der undrehbar, aber axial verschiebbar ein Zahnrad angeordnet ist, mit dem die in radialer Richtung verlaufende Antriebsspindel eines anzutreibenden Werkzeuges ständig in Eingriff steht. Ein zusätzlich zu einem Motor für den Drehantrieb des Revolverkopfes vorhandener Motor steht in ständiger Getriebeverbindung mit der Antriebswelle.

Da diese Lösung konstruktiv aufwendig ist, liegt der Erfindung die Aufgabe zugrunde, einen Werkzeugrevolver zu schaffen, der es ermöglicht, in einfacher, kostengünstiger Weise die von den Werkzeugmodulen, den Werkzeugen oder auch von der Werkzeugscheibe benötigten Hilfsenergien oder Hilfsmittel zuzuführen. Diese Aufgabe löst ein Werkzeugrevolver mit den Merkmalen des Anspruches 1.

Die hohle, relativ zum Gehäuse des Werkzeugrevolvers unbewegliche Säule ermöglicht in optimaler Weise die Zufuhr aller im Bereich der Werkzeugscheibe und der Werkzeuge benötigten Hilfsenergien, Schmiermittel und dergleichen, wobei nicht nur die Durchführung durch den von der hohlen Säule gebildeten Kanal in Frage kommt, sondern auch eine Durchführung in Kanälen, die in der Wand der Säule liegen. Die letztgenannte Möglichkeit erlaubt eine äußerst raumsparende Ausbildung der hohlen Säule. Außerdem wirft ein Energie- oder Fluidtransport in der hohlen Säule oder in Kanälen derselben auch an den Kanalenden keine Probleme auf, weil die hohle Säule relativ zum Gehäuse des Werkzeugrevolvers unbeweglich ist und am werkzeugscheibenseitigen Ende der Säule ein Kopf vorgesehen ist. Da dieser Kopf relativ zum Gehäuse feststehend ist, bereitet es keine Schwierigkeiten, in ihm die Getriebeelemente und die Schaltvorrichtung anzuordnen sowie letztere anzusteuern. Eine solche Schaltvorrichtung erlaubt es, die Übertragung von Antriebsenergie auf diejenige Aufnahme der Werkzeugscheibe zu beschränken, die sich in der Arbeitsstellung befindet, und diesen Antrieb nur dann zu aktivieren, wenn es sich bei dem in dieser Aufnahme befindenden Werkzeug um ein rotierendes Werkzeug handelt.

Eine relativ zum Gehäuse des Werkzeugrevolvers unbewegliche hohle Säule, durch deren zentralen Kanal elektrische Leitungen hindurchgeführt sind, ist zwar bei einem Werkzeugrevolver bekannt (DE-U-7 333 601). Dieser Werkzeugrevolver ist jedoch nicht mit antreibbaren Werkzeugen ausrüstbar, und die hohle Säule dient nur zur Abstützung des Drehmomentes eines die hohle Säule umfassenden Drehkolbens, mit dessen Hilfe der Revolverkopf in die unterschiedlichen, wählbaren Drehstellungen bewegt werden kann.

Bei einer bevorzugten Ausführungsform weist die Werkzeugscheibe eine zur Drehachse konzentrische Ausnehmung auf, in welche der Kopf der Säule eingreift. Hier stehen sich eine äußere Mantelfläche des Kopfes und eine innere Mantelfläche der zentralen Ausnehmung der Werkzeugscheibe gegenüber, wodurch problemlos abgedichtete Übergänge für den Transport der Hilfsenergien und Hilfsstoffe realisiert werden können.

Vorteilhaft ist eine Ausgestaltung der Schaltvorrichtung gemäß Anspruch 3. Das dabei für einen Antriebszylinder erforderliche Fluid oder die für einen Elektromagneten notwendige elektrische Energie wird durch die hohle Säule hindurch dem Kopf zugeführt.

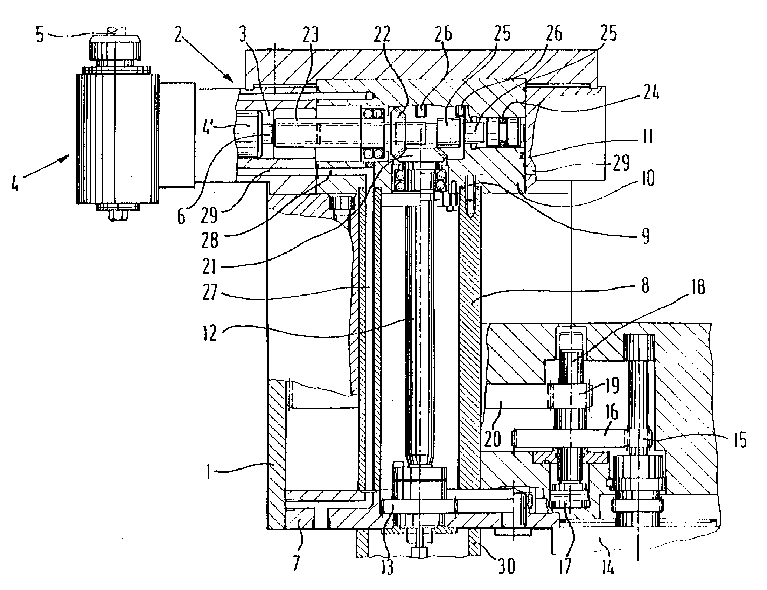

Im folgenden ist die Erfindung anhand eines in der Zeichnung dargestellten Ausführungsbeispiels im einzelnen erläutert. Die einzige Figur zeigt eine unvollständige, teilweise aufgebrochen dargestellte Ansicht des Ausführungsbeispiels.

Ein Werkzeugrevolver weist ein Gehäuse 1 auf, das an einer Werkzeugmaschine, beispielsweise einem Schlitten derselben, festlegbar ist. Am einen Ende dieses Gehäuses 1 ist eine relativ zu ihm drehbare Werkzeugscheibe 2 angeordnet, die über ihren Umfang gleichmäßig verteilt angeordnet Aufnahmen 3 für Werkzeuge oder Werkzeugmodule 4 einschließlich solcher mit rotierendem Werkzeug 5 aufweist. Im Ausführungsbeispiel haben die Aufnahmen 3 die Form radial verlaufender Bohrungen. In jede dieser Bohrungen ist ein Kupplungszapfen 4′ des Werkzeugmoduls 4 einschiebbar, über den eine in ihrer Kontur von der Kreisform abweichende Kupplungswelle 6 übersteht. Diese Kupplungswelle 6 ist über ein Winkelgetriebe mit der drehbar gelagerten Halterung für das Werkzeug 5 verbunden. Selbstverständlich sind aber auch Module, deren Werkzeug parallel zur Längsachse des Kupplungszapfens 4′ liegt, und Module in die Aufnahmen 3 einsetzbar, die ein stillstehendes Werkzeug tragen.

An dem der Werkzeugscheibe 2 abgewandten Ende ist das Gehäuse 1 durch eine Endplatte 7 verschlossen. An der Innenfläche der Endplatte 7 liegt das eine Ende einer konzentrisch zur Drehachse der Werkzeugscheibe 2 angeordneten, hohlen Säule 8 an, welche mit der Endplatte 7, beispielsweise mittels Schrauben, fest verbunden ist. Das andere Ende der hohlen Säule 8 ist fest, beispielsweise mittels Schrauben 9, mit einem zylindrischen Kopf 10 verbunden, der konzentrisch zur Säule 8 angeordnet ist. Der Kopf 10 ist vollständig in eine an seine Außenabmessungen angepaßte, zentrale Ausnehmung 11 der Werkzeugscheibe 2 eingeführt. Bei einer Drehung der Werkzeugscheibe 2 rotiert deshalb diese um den Kopf 10.

Aus Fertigungsgründen besteht im Ausführungsbeispiel die Werkzeugscheibe 2 aus einer Ringscheibe, deren Dicke etwas geringer ist als die axiale Länge des Kopfes 10, und einem mit dieser Ringscheibe verschraubten, zylindrischen Platte, in die hinein sich die zentrale Ausnehmung 11 und dementsprechend der Kopf 10 erstrecken.

Im Kopf 10 ist konzentrisch zur Säule 8 das eine Ende einer in der Längsachse der Säule 8 angeordneten Verbindungswelle 12 gelagert, die andererseits in der Endplatte 7 gelagert ist. Hier ist auf ihr fest ein Stirnzahnrad 13 angeordnet, das über weitere Stirnzahnräder mit einem Antriebsmotor 14 in Verbindung steht. Dieser Antriebsmotor 14 dient auch dazu, die Werkzeugscheibe 2 relativ zum Gehäuse 1 und dem Kopf 10 zu verdrehen. Ein mit einem Ritzel 15 auf der Motorwelle in Eingriff stehendes, stirnverzahntee Zahnrad 16 ist deshalb auf einer mittels eines Kolbens 17 axial verschiebbaren Getriebewelle 18 angeordnet, die außerdem ein Ritzel 19 trägt, welche mit einem für eine Drehbewegung der Werkzeugscheibe anzutreibenden Zahnrad 20 kämmt. Bei der in der Figur dargestellten Stellung des Kolbens 17 kann mittels des Antriebemotors 14 die Werkzeugscheibe 2 wahlweise in der einen oder anderen Drehrichtung gedreht werden. Soll der Antriebsmotor 4 nur das Werkzeug 5 antreiben, dann wird mittels des doppeltwirkenden Kolbens 17 die Getriebewelle 18 in die im Bereich ihres freien Endes mit strichpunktierter Linie angedeutete Stellung verschoben, in welcher das Zahnrad 16 außer Eingriff mit dem Ritzel 15 ist.

Das in der Werkzeugscheibe 2 gelagerte Ende der Verbindungswelle 17 trägt ein Kegelrad 21, welches mit einem zweiten Kegelrad 22 kämmt. Letzteres ist auf einer in der Werkzeugscheibe 4 drehbar gelagerten und radial verschiebbaren Antriebswelle 23 drehfest, aber axial verschiebbar gelagert. Mittels eines doppeltwirkenden Kolbens 24 kann die Antriebswelle 23 aus einer Position, in der ihr dem Kolben 24 abgewandtes Ende nicht über die Außenmantelfläche des Kopfes 10 übersteht, in eine Stellung verschoben werden, in welcher dieses Ende in die sich in der Arbeitsstellung befindende Aufnahme 3 der Werkzeugscheibe 2 eingreift. Die Antriebswelle 23 hat in diesem Endabschnitt eine zentrale Bohrung, deren Innenprofil an das Außenprofil der Kupplungswelle 6 angepaßt ist. Die Antriebswelle 23 kann deshalb auf das über den Kupplungszapfen 4′ überstehende Ende der Kupplungswelle 6 aufgesteckt werden, wodurch eine drehfeste Verbindung hergestellt wird. In der Figur ist aus Gründen der Übersichtlichkeit eine Stellung der Antriebswelle 23 dargestellt, in der diese nicht über die Kupplungswelle übergeschoben ist.

Mittels eines auf der Antriebswelle 23 zwischen dem Kolben 24 und dem zweiten Kegelrad 22 fest angeordneten Sensorkörpers 25 und zwei an der Verschiebebahn des Sensorkörpers 25 angeordneten Sensoren 26, die beispielsweise als Näherungsschalter ausgebildet sein können, wird die Stellung der Antriebswelle 23 überwacht.

Sowohl die zum Kolben 24 führenden Druckmittelleitungen als auch die Signalleitungen der Sensoren 26 sind in nicht dargestellter Weise durch die hohle Säule 8 hindurchgeführt.

In der hohlen Säule 8 können auch Leitungen verlaufen, durch die hindurch Kühlflüssigkeit für die Werkzeuge oder Schmiermittel transportiert werden. Ferner kann die Säule 8 beispielsweise Leitungen für ein Druckmittel enthalten, mittels dessen Spannvorrichtungen betätigt werden, welche den Kupplungszapfen 4′ in der ihn aufnehmenden Aufnahme 3 festspannen. Im Ausführungsbeispiel sind nicht alle Leitungen durch den Innenraum der Säule 8 hindurchgeführt. Vielmehr ist die Wandung der Säule 8 in Längsrichtung zur Bildung einer Leitung 27 durchbohrt, an die sich im Kopf 10 eine Leitung 28 anschließt, die radial zur Außenmantelfläche verläuft und dort abgedichtet an eine radial verlaufende Bohrung 29 der sich in der Arbeitsstellung befindenden Aufnahme 3 anschließt. Weitere derartige Leitungen können selbstverständlich vorgesehen sein, und sowohl im Kopf 10 als auch in den Aufnahmen 3 können radiale Bohrungen in axialer Richtung versetzt nebeneinander liegen.

Im Ausführungsbeispiel schließt sich an die Außenseite der Endplatte 7 ein Schutzgehäuse 30 an, in dem sich ein Drehgeber befindet.

Im Inneren des Gehäuses 1 liegen in bekannter Weise konzentrisch zueinander zwei Zahnkränze, von denen der eine der Werkzeugscheibe 2 und der andere dem Gehäuse 1 fest zugeordnet ist. Befindet sich die Werkzeugscheibe 2 in einer der wählbaren Stellungen und ist sie in dieser Stellung verriegelt, dann greift ein an einem Verriegelungsglied vorgesehener Zahnkranz gleichzeitig in die beiden konzentrischen Zahnkränze ein. Ehe die Werkzeugscheibe 2 in eine andere Drehstellung gebracht werden kann, muß deshalb das Verriegelungsglied zunächst in seine Freigabestellung bewegt werden, um dann durch ein Drehen des Zahnrades 9 die Drehbewegung eines im Gehäuse 1 drehbar gelagerten Antriebsgliedes auf die Werkzeugscheibe 2 übertragen zu können. Für die Betätigung des Verriegelungsgliedes und den Drehantrieb der Werkzeugscheibe 2 kann eine der bekannten Konstruktionen verwendet werden.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hevorgehoben und insbesondere nicht in den Ansprüchen erwähnt sind.

## Patentansprüche

1. Werkzeugrevolver mit
a) einem mit einer Werkzeugmaschine oder dergleichen zu verbindenden Gehäuse (1),
b) einem Antriebsmotor (14),
c) einer Aufnahmen (3) für Werkzeuge (5) aufweisenden Werkzeugscheibe (2) , die relativ zum Gehäuse (1) drehbar gelagert und in wählbaren Winkelstellungen verriegelbar ist,
d) einer hohlen Säule (8), in der eine sich in Säulenlängsrichtung erstreckende, vom Antriebsmotor (14) antreibbare Welle (12), über die dasjenige Werkzeug (5) antreibbar ist, das in die in der Arbeitsstellung stehende Aufnahme (3) eingesetzt ist, angeordnet und wenigstens eine Leitung (27) vorgesehen ist, welche in ein Übertragungssystem einbezogen ist,
dadurch gekennzeichnet, daß
e) die hohle Säule (8) relativ zum Gehäuse (1) unbeweglich angeordnet ist,
f) mit dem werkzeugscheibenseitigen Ende der hohlen Säule (8) ein Kopf (10) fest verbunden ist,
g) der Kopf (10) Getriebeelemente (21, 22) und eine Schaltvorrichtung (23, 24) enthält, über welche das in der Arbeitsstellung stehende, antreibbare Werkzeug (5) mit der Antriebswelle (12) kuppelbar ist.

2. Werkzeugrevolver nach Anspruch 1, dadurch gekennzeichnet, daß die Werkzeugscheibe (2) eine zu ihrer Drehachse konzentrische Ausnehmung (11) aufweist, in welche der Kopf (10) der Säule (8) eingreift.

3. Werkzeugrevolver nach Anspruch 1 oder 2, dadurch gekennzeichnet, daß die Schaltvorrichtung eine radial zur Drehachse der Werkzeugscheibe (2) verlaufende Schiebewelle (18) aufweist, die in jeder wählbaren Winkelstellung der Werkzeugscheibe (2) auf deren in der Arbeitsstellung stehende Aufnahme (3) ausgerichtet und mit dem Werkzeugantrieb kuppelbar ist, und daß der Schiebewelle (18) ein ebenfalls im Kopf (10) angeordneter Arbeitszylinder oder ein Elektromagnet als Betätigungselement zugeordnet ist.

4. Werkzeugrevolver nach einem der Ansprüche 1 bis 3, dadurch gekennzeichnet, daß der Kopf (10) mit wenigstens einer in seiner Außenmantelfläche mündenden Leitung (28) oder Bohrung versehen ist, die mit der in der Säule (8) vorgesehenen Leitung (27) verbunden und in den wählbaren Winkelstellungen der Werkzeugscheibe (2) auf eine der in der der Außenmantelfläche des Kopfes (10) zugekehrten Innenmantelfläche der Werkzeugscheibe (2) im Bereich der Aufnahmen (3) mündenden Leitungen (29) oder Bohrungen ausgerichet sowie mit diesen abgedichtet verbunden ist.

5. Werkzeugrevolver nach einem der Ansprüche 1 bis 4, dadurch gekennzeichnet, daß die Säule (8) an ihrem dem Kopf (10) abgekehrten Ende mit dem Gehäuse (1) verbunden ist.

6. Werkzeugrevolver nach einem der Ansprüche 1 bis 5, dadurch gekennzeichnet, daß für die Durchführung von Energie, Schmierstoff, Kühlmittel, Druckmittel oder dergleichen durch die Säule (8) wenigstens ein in der Wand der Säule (8) liegender Kanal (7) vorgesehen ist.

## Revendications

1. Tourelle-révolver porte-outils qui comprend :
a) une enveloppe (1) appelée à être reliée à une machine-outil ou similaire (1);
b) un moteur d'actionnement (14);
c) un plateau porte-outils (2) présentant des logements (3) pour des outils (5), plateau qui est monté rotatif par rapport à l'enveloppe (1) et peut être immobilisé dans un certain nombre de positions angulaires sélectionnées;
d) une colonne creuse (8), dans laquelle s'étend longitudinalement un arbre (12) pouvant être entraîné en rotation par un moteur (14) et qui permet d'actionner l'outil (5) monté dans celui des logements (3) qui est en position active ou de travail, ladite colonne renfermant, au moins, une ligne d'alimentation d'énergie (27), caractérisé en ce que :
e) la colonne creuse (8) occupe une position invariable par rapport à l'enveloppe (1);
f) une tête (10) est reliée invariablement à l'extrémité de la colonne creuse (8) voisine du plateau porte-outils; et
g) en ce que la tête (10) renferme des éléments de transmission (21, 22) et un dispositif (23, 24) au moyen duquel l'outil, en position de travail (13), peut être accouplé à l'arbre de transmission (12).

2. Tourelle-révolver selon la revendication 1, caractérisée en ce que le plateau porte-outils (2) comporte ue tête (10) engagée dans une cavité concentrique (11) de la colonne creuse (8).

3. Tourelle-révolver selon la revendication 1 ou 2, caractérisée en ce que le dispositif de commutation comporte un arbre coulissant (18) s'étendant radialement à l'axe de rotation du plateau (2), qui, dans toutes les positions angulaires du plateau porte-outils (2) pouvant être sélectionnées, est orienté vers le logement (3) placé en position de travail et peut être accouplé à l'actionnement de l'outil, et en ce que l'arbre coulissant (18) comporte aussi un cylindre d'actionnement logé dans la tête (10) ou un électro-aimant en tant qu'organe d'actionnement.

4. Tourelle-révolver selon l'une quelconque des revendications 1 à 3, caractérisée en ce que la tête (10) comporte, au moins, une ligne (28) débouchant à sa surface d'enveloppe ou un perçage, qui est reliée à la ligne (27) de la colonne (8) et qui, dans les positions angulaires sélectives du plateau porte-outils (2), peut être orienté vers la surface d'enveloppe intérieure du plateau (2) des lignes (29) ou des perçages débouchant dans la région des logements (3) et peut être relié de manière étanche avec ceux-ci.

5. Tourelle-révolver, selon l'une quelconque des revendications 1 à 4, caractérisée en ce que l'extrémité de la colonne (8) opposée à sa tête (10) est reliée à l'enveloppe (1).

6. Tourelle-révolver, selon l'une quelconque des revendications 1 à 5, caractérisée en ce que, pour assurer l'alimentation en énergie, lubrifiant, agent de refroidissement, agent sous pression et autres, la colonne (8) comporte, au moins, un canal (7) ménagé dans la paroi de la colonne (8).

## Claims

1. Tool turret with
a) a housing (1) to be connected to a machine tool or the like,
b) a drive motor (14),
c) a tool disc (2) comprising holders (3) for tools (5), which disc (2) is mounted to rotate relative to the housing (1) and can be locked in selected angular positions,
d) a hollow column (8), in which a shaft (12) is located, extending in the longitudinal direction of the column, which can be driven by the drive motor (14), by which shaft the tool (5) inserted in the holder (3) located in the working position can be driven and at least one line (27) is provided, which is included in a transmission system,
characterised in that
e) the hollow column (8) is arranged so that it is stationary relative to the housing (1),
f) a head (10) is securely connected to the end of the hollow column (8) adjacent the tool disc,
g) the head (10) contains transmission members (21, 22) and an indexing device (23, 24), by which the tool (5) which is able to be driven and is in the working position, can be connected to the drive shaft (12).

2. Tool turret according to Claim 1, characterised in that the tool disc (2) comprises a recess (11) concentric with its axis of rotation, in which the head (10) of the column (8) engages.

3. Tool turret according to Claim 1 or 2, characterised in that the indexing device comprises a sliding shaft (18) extending radially with respect to the axis of rotation of the tool disc (2), which shaft (18), in any selectable angular position of the tool disc (2) is aligned with its holder (3) in the working position and can be connected to the tool drive, and that associated with the sliding shaft (18) is a working cylinder likewise located in the head (10) or an electromagnet as the actuating member.

4. Tool turret according to one of Claims 1 to 3, characterised in that the head (10) is provided with at least one line (28) or bore opening into its outer surface, which line or bore is connected to the line (27) provided in the column (8) and in the selectable angular positions of the tool disc (2) is aligned with one of the lines (29) or bores opening out in the inner surface of the tool disc (2) facing the outer surface of the head (10), in the region of the holders (3) and is connected in a sealed manner to these lines (29) or bores.

5. Tool turret according to one of Claims 1 to 4, characterised in that at its end remote from the head (10), the column (8) is connected to the housing (1).

6. Tool turret according to one of Claims 1 to 5, characterised in that at least one channel (7) located in the wall of the column (8) is provided for carrying power, lubricant, coolant, pressure medium or the like through the column (8).
